# FASCICULE DE BREVET EUROPEEN

(11) **EP 3 132 985 B1**
(45) Date de publication et mention de la délivrance du brevet: **16.05.2018**
(21) Numéro de dépôt: 16179052.2
(22) Date de dépôt: 12.07.2016
(51) Int. Cl.: B60T 17/00, B60T 17/04, F16L 55/02

(54) **ENSEMBLE D'UNE TETE D'ACCOUPLEMENT D'UNE SORTIE D'AIR SOUS PRESSION D'UN VEHICULE FERROVIAIRE ET D'UN DISPOSITIF D'ATTENUATION ACOUSTIQUE**
EINHEIT AUS EINEM KUPPLUNGSKOPF EINES DRUCKLUFTAUSLASSES EINES SCHIENENFAHRZEUGS UND EINER SCHALLDÄMPFUNGSVORRICHTUNG
COUPLING HEAD ASSEMBLY FOR A PRESSURISED AIR OUTLET OF A RAILWAY VEHICLE AND AN ACOUSTIC MUFFLER DEVICE

(30) Priorité: 16.07.2015 FR 1556691
(43) Date de publication de la demande: 22.02.2017
(73) Titulaire: SNCF Mobilités, 93200 Saint-Denis (FR)
(72) Inventeur: BOSSE, David, 35480 GUIPRY (FR); LE LABOURIER, Maëla, 35200 RENNES (FR); SAUVAGER, Benjamin M., 35170 BRUZ (FR)
(74) Mandataire: Argyma

(56) Documents cités:
- CH-A- 412 377
- FR-A1- 2 884 293
- JP-A- 2013 150 820
- US-A- 2 600 236
- US-A1- 2009 266 643

## Description

### DOMAINE TECHNIQUE GENERAL ET ART ANTERIEUR

La présente invention concerne la maintenance des freins pneumatiques d'un véhicule ferroviaire et vise plus particulièrement un dispositif d'atténuation acoustique pour la vidange d'une conduite générale de frein pneumatique d'un véhicule ferroviaire.

### PRESENTATION GENERALE DE L'INVENTION

De manière classique, un véhicule ferroviaire de transport de fret comporte plusieurs voitures reliées entre elles et sur lesquelles est chargé du fret à transporter. Un tel véhicule ferroviaire comprend un système de freinage afin de permettre de le ralentir et de l'arrêter, notamment dans une gare ferroviaire.

De manière connue, le système de freinage utilisé est pneumatique et comprend une conduite générale comprenant de l'air sous pression. Afin de commander simultanément le freinage de toutes les voitures du véhicule, chaque voiture comprend une conduite élémentaire reliée aux conduites des autres voitures afin de former une conduite générale. L'activation du système de freinage se fait par dépression de la conduite générale, ce qui a pour effet un resserrement des mâchoires des freins de chaque voiture.

Le système de freinage d'un véhicule ferroviaire fait l'objet d'une maintenance régulière afin de contrôler son bon fonctionnement. En pratique, la maintenance d'un système de freinage pneumatique consiste, entre autres, à ouvrir une vanne afin de vider l'air de la conduite générale via une sortie d'air, ce qui permet de vérifier la continuité de la conduite générale entre les différentes voitures, ainsi qu'à vérifier le bon serrage des mâchoires de freins sur les roues lors d'une dépression de la conduite générale.

Afin que l'opération de vidange de l'air de la conduite ne prenne pas trop de temps, l'air est vidé rapidement, ce qui entraîne un bruit important, pouvant atteindre 135 dB.

Une telle intensité de bruit pouvant être désagréable voire dangereuse pour un opérateur, il est connu que l'opérateur monte un dispositif d'atténuation acoustique, appelé également «silencieux de purge », au niveau de la sortie d'air de la conduite générale afin de réduire le bruit tout en permettant une vidange suffisamment rapide.

On connaît par le document FR2884293A1 de la société SNCF, un dispositif d'atténuation acoustique monobloc comprenant, d'une part, une extrémité de connexion à une vanne de conduite générale et, d'autre part, un corps d'atténuation creux allongé. Lorsque l'air sous pression de la conduite générale s'échappe par la sortie d'air, il pénètre dans le dispositif d'atténuation acoustique via son extrémité de connexion et traverse ensuite le corps d'atténuation creux allongé, ce qui atténue le bruit. Le corps d'atténuation creux allongé forme ainsi un silencieux.

Cependant, un tel dispositif d'atténuation acoustique présente des inconvénients. Tout d'abord, un tel dispositif d'atténuation acoustique possède des dimensions et un poids importants, ce qui rend pénible sa manipulation, son transport et son montage à la conduite générale par des opérateurs.

De plus, du fait de sa forme, un tel dispositif d'atténuation acoustique est parfois utilisé, de manière détournée, comme marteau, ce qui peut endommager son extrémité de connexion, empêchant ainsi toute connexion, et diminuer ses performances. Enfin, un tel dispositif d'atténuation acoustique n'est pas adaptable aux évolutions de la législation sur la pénibilité au travail qui est de plus en plus contraignante. Aussi, il est nécessaire de concevoir un nouveau dispositif d'atténuation acoustique pour répondre à chaque nouvelle évolution législative, ce qui est coûteux.

L'invention a donc pour but de remédier à ces inconvénients en proposant un dispositif d'atténuation acoustique adaptable, léger et peu encombrant, dont le montage est aisé et dont la durée de vie est importante.

### PRESENTATION GENERALE DE L'INVENTION

L'invention concerne un ensemble d'une tête d'accouplement d'une sortie d'air sous pression d'une véhicule ferroviaire et d'un dispositif d'atténuation acoustique d'après le préambule de la revendication 1. Grâce à l'invention, le dispositif d'atténuation acoustique peut être désassemblé de manière à remplacer l'organe d'atténuation acoustique en cas de besoin. L'utilisation d'organes d'atténuation acoustique de dernière génération permet de limiter les dimensions et la masse du dispositif, ce qui est très avantageux. L'organe de connexion permet avantageusement de former un raccord universel pour la sortie d'air sous pression.

De préférence, l'organe de connexion comporte un corps principal comprenant un orifice traversant s'étendant selon un axe. Le flux d'air issu de la sortie d'air peut ainsi être directement conduit dans l'organe d'atténuation acoustique.

De préférence encore, l'organe de connexion comprend des moyens de centrage configurés pour aligner l'axe de l'orifice traversant avec une sortie d'air sous pression d'un véhicule ferroviaire. Les moyens de centrage se présentent, de préférence, sous la forme d'une portée au moins partiellement conique ou sphérique. Ainsi, l'organe de connexion s'aligne naturellement avec la sortie d'air. Cela est particulièrement avantageux lorsque la sortie d'air comprend un joint d'étanchéité.

De manière préférée, l'organe de connexion comprend des moyens de serrage configurés pour serrer l'organe de connexion avec la sortie d'air sous pression du véhicule ferroviaire. Ainsi, tout risque de retrait involontaire est évité. De préférence, les moyens de serrage sont configurés pour exercer un serrage axial selon l'axe de l'orifice traversant de manière à comprimer le joint d'étanchéité.

Selon un aspect de l'invention, les moyens de serrage comportent au moins deux éléments de serrage latéraux. De manière préférée, les moyens de serrage comportent une boucle.

Selon un autre aspect de l'invention, les moyens de serrage comportent un unique élément de serrage central. De manière préférée, les moyens de serrage comportent une sangle de serrage.

De manière préférée, l'organe d'atténuation est assemblé à l'organe de connexion par vissage, ce qui permet de remplacer de manière rapide l'organe d'atténuation en cas de besoin.

L'invention concerne en outre un organe de connexion pour sortie d'air sous pression d'un véhicule ferroviaire, l'organe de connexion comportant un corps principal comprenant un orifice traversant s'étendant selon un axe, les moyens de serrage sont configurés pour exercer un serrage axial selon ledit axe.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une vue schématique en coupe d'une tête d'accouplement de sortie d'air d'un système de freinage ferroviaire,
- la figure 2 est une vue en perspective de la figure 1,
- la figure 3 est une vue en perspective en coupe d'un dispositif d'atténuation acoustique selon l'invention monté sur la vanne de la figure 1,
- la figure 4 est une vue schématique de la figure 3,
- la figure 5 est une vue schématique en coupe d'une forme de réalisation d'un organe de connexion du dispositif d'atténuation selon l'invention, et
- les figures 6 à 9 sont des vues d'autres formes de réalisation du dispositif d'atténuation acoustique selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

L'invention va être présentée pour un véhicule ferroviaire de transport de fret comportant plusieurs voitures reliées entre elles et sur lesquelles est chargé du fret à transporter. Néanmoins, il va de soi que l'invention s'applique à tout véhicule ferroviaire.

Un tel véhicule ferroviaire comprend un système de freinage pneumatique afin de permettre de le ralentir ou de l'arrêter, notamment dans une gare ferroviaire. Chaque voiture du véhicule ferroviaire comprend une conduite élémentaire reliée aux conduites élémentaires des autres voitures afin de former une conduite générale du système de freinage dans laquelle est comprise de l'air sous pression.

La conduite générale comporte une extrémité ouverte, appelée également sortie d'air, et une vanne de commande permettant, en position fermée, de maintenir de l'air sous pression dans ladite conduite générale et, en position ouverte, de laisser circuler l'air dans ladite conduite générale afin de la vidanger via sa sortie d'air, notamment lors d'une opération de maintenance du système de freinage pneumatique. Un tel système de freinage pneumatique est connu de l'homme du métier.

En pratique, une tête d'accouplement est montée au niveau de l'extrémité de sortie de la conduite générale afin de permettre l'accouplement d'un dispositif d'atténuation acoustique ou autre comme cela sera présenté par la suite.

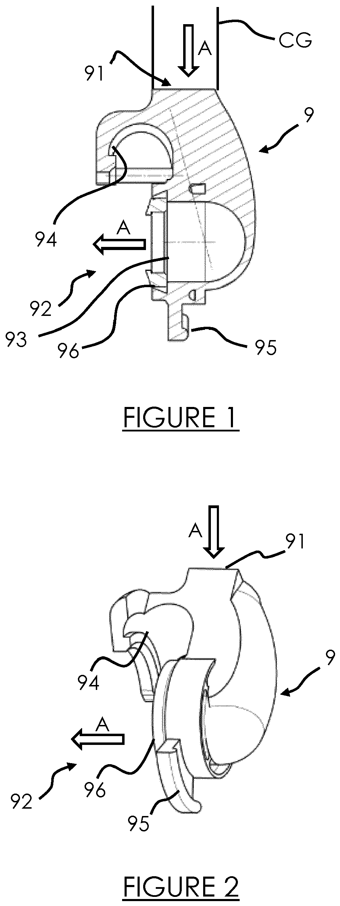

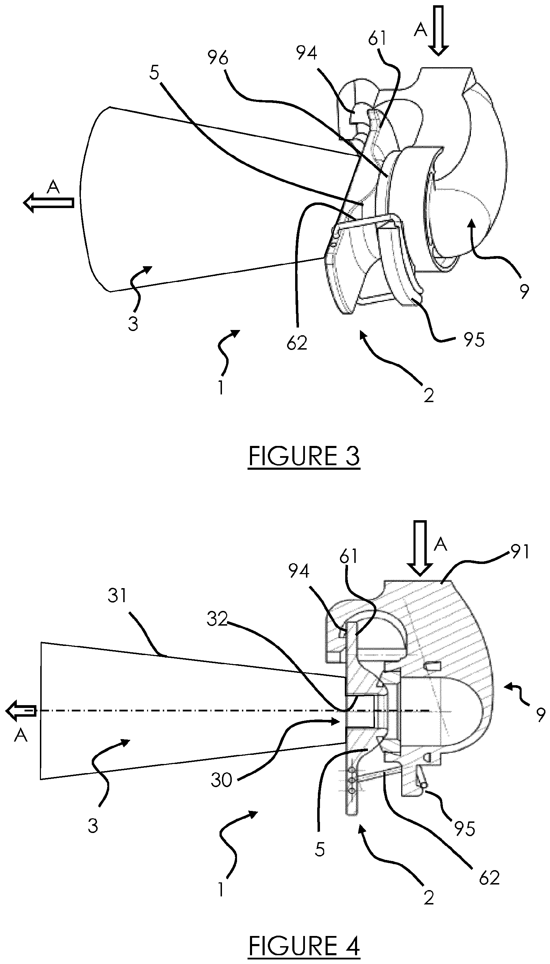

En référence aux figures 1 et 2, il est représenté une tête d'accouplement 9 comprenant une extrémité de liaison 91, apte à être reliée à l'extrémité de sortie d'une conduite générale CG d'un système de freinage, et une extrémité de raccordement 92 apte à être reliée à un dispositif d'atténuation acoustique 1 comme illustré à la figure 3. Lorsque la vanne de la conduite générale CG est ouverte lors d'une étape de vidange, un flux d'air A circule dans la tête d'accouplement 9 de son extrémité liaison 91 vers son extrémité de raccordement 92 comme illustré sur les figures 1 à 4. Dans cet exemple, le flux d'air A est dévié de 90° dans la tête d'accouplement 9.

Dans cet exemple, la tête d'accouplement 9 est apte à être reliée à un dispositif d'atténuation acoustique par un système de raccord rapide connu de l'homme du métier. A cet effet, l'extrémité de raccordement 92 de la tête d'accouplement 9 se présente sous la forme d'un demi-raccord apte à être accouplé avec un deuxième demi-raccord présent sur un dispositif atténuation acoustique selon l'art antérieur. Comme illustré aux figures 1 et 2, l'extrémité de raccordement 92 comprend un orifice de sortie d'air 93, une première pièce de guidage 94 et une deuxième pièce de guidage 95, lesdites pièces 94, 95 de l'extrémité de raccordement 92 étant aptes à coopérer avec un dispositif d'atténuation acoustique selon l'art antérieur par un mouvement de quart de tour. Les pièces de guidage 94, 95 sont décalées axialement par rapport à l'axe de la sortie d'air 93.

De manière préférée, en référence à la figure 1, l'extrémité de raccordement 92 comprend un joint d'étanchéité 96 monté au niveau de la sortie d'air 93 afin d'étanchéifier l'accouplement. Une telle tête d'accouplement 9 étant connue, elle ne sera pas décrite plus en détails.

En référence aux figures 3 et 4, un dispositif d'atténuation acoustique 1 comporte un organe de connexion 2 adapté pour être monté à une sortie d'air sous pression CG d'un véhicule ferroviaire, en particulier une tête d'accouplement 9 telle que décrite précédemment, et un organe d'atténuation acoustique 3.

Selon l'invention, l'organe de connexion 2 et l'organe d'atténuation acoustique 3 sont indépendants et assemblés de manière amovible. Ainsi, en cas d'évolution législative, il suffit de remplacer l'organe d'atténuation acoustique 3 par un nouvel organe d'atténuation acoustique 3 conforme à la nouvelle législation. Par ailleurs, l'encombrement et la masse du dispositif d'atténuation acoustique 1 sont considérablement réduits. Dans cet exemple, la longueur axiale du dispositif d'atténuation acoustique 1 est comprise entre 8 cm et 12 cm. Le diamètre est compris entre 4 cm et 10 cm.

L'organe d'atténuation acoustique 3 et l'organe de connexion 2 du dispositif d'atténuation acoustique 1 vont être dorénavant présentés en détails.

De manière préférée, l'organe d'atténuation acoustique 3 et l'organe de connexion 2 sont réalisés en matériaux inoxydables et ont subi un traitement anti-corrosion.

L'organe d'atténuation acoustique 3 comporte un orifice d'entrée d'air 30, un atténuateur 31 et des premiers moyens d'assemblage. De manière préférée, les premiers moyens d'assemblage comportent un filetage 32 formé autour de l'orifice d'entrée d'air 30 mais il va de soi que d'autres premiers moyens d'assemblage pourraient convenir, par exemple, un taraudage.

De manière préférée, l'organe d'atténuation acoustique 3 est un organe d'atténuation acoustique disponible dans le commerce, par exemple, vendu par les sociétés commerciales STEMM, BERTIN ou PARKER. Un tel organe d'atténuation acoustique 3 est connu de l'homme du métier et ne sera pas présenté plus en détails.

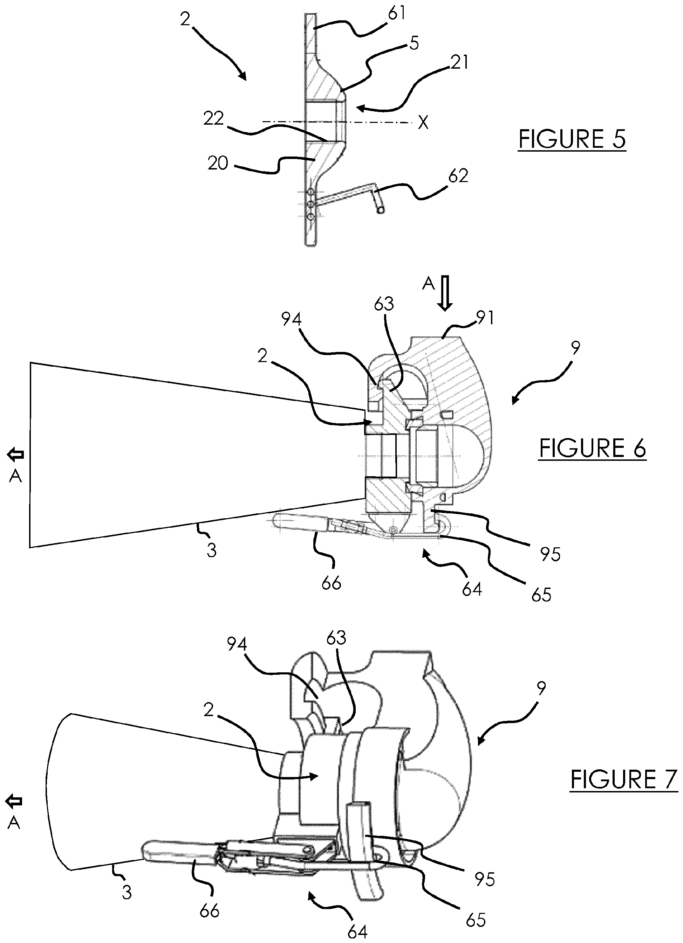

En référence à la figure 5, l'organe de connexion 2 comporte un corps principal 20 comportant un orifice traversant 21, s'étendant axialement selon un axe X, adapté pour mettre en relation fluidique l'orifice de sortie d'air 93 de la tête d'accouplement 9 et l'orifice d'entrée d'air 30 de l'organe d'atténuation acoustique 3. Dans cet exemple, la longueur axiale de l'organe de connexion 2 est comprise entre 7 cm et 12 cm. Le diamètre de l'organe de connexion 2 est compris entre 4 cm et 10 cm.

L'organe de connexion 2 comporte en outre des deuxièmes moyens d'assemblage à l'organe d'atténuation acoustique 3 qui se présentent sous la forme d'un taraudage 22 adapté pour coopérer, par vissage, avec le filetage 32 de l'organe d'atténuation acoustique 3. Il va de soi que d'autres deuxièmes moyens d'assemblage pourraient convenir. Un assemblage par vissage est particulièrement simple, rapide et fiable. De préférence encore, les premiers moyens d'assemblage et les deuxièmes moyens d'assemblage sont étanches à l'air pour résister à une pression constante de 15 bar pendant 15 minutes.

Toujours en référence à la figure 5, l'organe de connexion 2 comporte en outre des moyens de centrage avec la tête d'accouplement 9. De manière préférée, les moyens de centrage se présentent sous la forme d'une portée au moins partiellement conique ou sphérique 5 adaptée pour coopérer avec l'orifice de sortie d'air 93. Une telle portée conique ou sphérique 5 permet en outre d'assurer l'étanchéité lors de l'assemblage en coopérant avec le joint d'étanchéité 96. De préférence, les moyens de centrage autorisent une rotation autour de l'axe X de l'orifice traversant 21 afin de faciliter le montage de l'organe de connexion 2 par rotation, par exemple, d'un quart de tour. Un tel organe de connexion 2 possède une forme différente de celle de l'extrémité de connexion d'un dispositif d'atténuation acoustique monobloc enseigné par le document FR2884293A1. Le montage de l'organe de connexion 2 est ainsi simplifié.

L'organe de connexion 2 comporte en outre des moyens de serrage avec la tête d'accouplement 9. De manière préférée, les moyens de serrage sont configurés pour exercer un serrage selon l'axe X de l'orifice traversant 21 afin de permettre une compression axiale du joint d'étanchéité 96 garantissant ainsi une absence de fuites. Tout l'air issu de la conduite générale CG est alors acheminé vers l'organe d'atténuation acoustique 3.

Les moyens de serrage peuvent se présenter sous plusieurs formes différentes. Quelques formes de réalisation préférées vont être dorénavant présentées en référence aux figures 3-4, 6-7 et 8-9.

Selon une première forme de réalisation de l'invention, en référence aux figures 3 à 4, les moyens de serrage comprennent une portion de guidage 61 apte à coopérer avec la première pièce de guidage 94 de la tête d'accouplement 9 et une boucle 62 apte à coopérer avec la deuxième pièce de guidage 95 de la tête d'accouplement 9. Dans cet exemple, la portion de guidage 61 est issue de matière du corps principal 20 et s'étend dans un plan transversal à l'axe X de l'orifice traversant 21. La longueur radiale de la portion de guidage 61 est déterminée de manière à s'étendre dans la première pièce de guidage 94 en position montée. La boucle 62 est montée rotative par rapport au corps principal 20 selon un axe de rotation s'étendant orthogonalement à l'axe X de l'orifice traversant 21. En position serrée, la deuxième pièce de guidage 95 de la tête d'accouplement 9 est prisonnière de la boucle 62 comme illustré à la figure 3.

Pour assembler le dispositif d'atténuation acoustique 1 à la tête d'accouplement 9, toujours en référence aux figures 3 et 4, le dispositif d'atténuation acoustique 1 est déplacé de manière à glisser la portion de guidage 61 dans la première pièce de guidage 94 de la tête d'accouplement 9. Puis, le dispositif d'atténuation acoustique 1 est positionné de manière à ce que l'orifice traversant 21 et l'orifice de sortie d'air 93 soient alignés ensemble. La boucle 62 est ensuite tournée pour bloquer la deuxième pièce de guidage 95, ce qui exerce un serrage axial empêchant, d'une part, tout désassemblage et permettant, d'autre part, d'assurer l'étanchéité par compression du joint 96.

Selon une deuxième forme de réalisation de l'invention en référence aux figures 6 et 7, les moyens de serrage comprennent une portion de liaison 63 apte à coopérer avec la première pièce de guidage 94 de la tête d'accouplement 9. Dans cet exemple, la portion de liaison 63 est issue de matière du corps principal 20 et s'étend dans un plan transversal à l'axe X de l'orifice traversant 21 et comporte un bord de forme complémentaire à la première pièce de guidage 94 de la tête d'accouplement 9. De manière similaire à la portion de guidage 61, la longueur radiale de la portion de liaison 63 est déterminée de manière à s'étendre dans la première pièce de guidage 94 en position montée.

Toujours en référence aux figures 6 et 7, les moyens de serrage comprennent en outre un système de fermeture à levier 64 apte à coopérer avec la deuxième pièce de guidage 95 de la tête d'accouplement 9. Le système de fermeture à levier 64 comporte un crochet 65 et une manette 66 de serrage dudit crochet 65.

Pour assembler le dispositif d'atténuation acoustique 1, toujours en référence aux figures 6 et 7, le dispositif d'atténuation acoustique 1 est déplacé de manière à glisser la portion de liaison 63 dans la première pièce de guidage 94 de la tête d'accouplement 9. Puis, le dispositif d'atténuation acoustique 1 est positionné de manière à ce que l'orifice traversant 21 et l'orifice de sortie d'air 93 soient alignés ensemble. Le crochet 65 est ensuite positionné sur la deuxième pièce de guidage 95 puis la manette 66 est actionnée, ce qui exerce un serrage axial empêchant, d'une part, tout désassemblage et permettant d'autre part, d'assurer l'étanchéité par compression du joint 96.

Les formes de réalisation précédentes présentent des moyens de serrage comportant deux éléments de serrage latéraux mais il va de soi qu'ils pourraient comporter un unique élément de serrage central comme présenté dans la forme de réalisation suivante, ou plus de deux éléments de serrage.

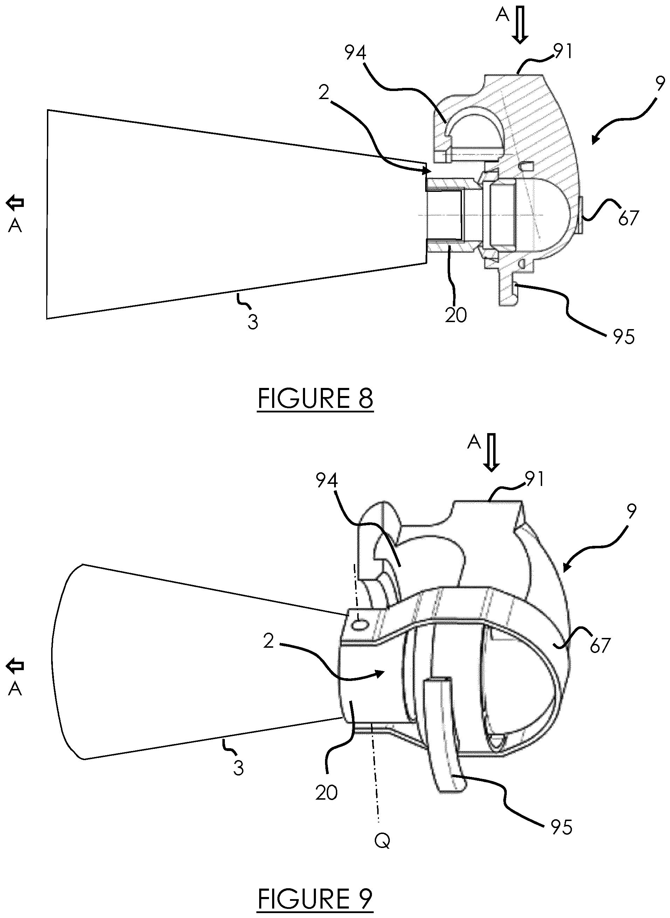

Selon une troisième forme de réalisation de l'invention en référence aux figures 8 et 9, les moyens de serrage comprennent une sangle 67 apte à entourer la tête d'accouplement 9. La sangle 67 est montée rotative sur le corps principal 20 de l'organe de connexion 2 selon un axe de rotation Q perpendiculaire à l'axe X de l'orifice traversant 21. L'axe de rotation Q et l'axe X de l'orifice traversant sont sécants de manière à permettre un serrage axial optimal comme illustré à la figure 9. Un tel assemblage est avantageux car il peut être réalisé selon une direction uniquement axiale sans inclinaison du dispositif d'atténuation acoustique 1 par rapport à la tête d'accouplement 9. Seule une sangle 67 est nécessaire pour réaliser le serrage.

Il a été présenté trois formes de réalisation des moyens de serrage, cependant, il va de soi que d'autres types de moyens de serrage pourraient convenir, comme par exemple un système à effet venturi, un fermoir à visser, etc.

Grâce à l'invention, le dispositif d'atténuation acoustique 1 peut comprendre un organe d'atténuation acoustique 3 de dernière génération et bon marché étant donné qu'il peut être retiré de manière rapide et pratique de l'organe de connexion 2. En intégrant un organe d'atténuation acoustique 3 de dernière génération, la masse totale du dispositif d'atténuation acoustique 1 peut diminuer de 50% et posséder un encombrement réduit, ce qui limite la tentation des utilisateurs d'utiliser le dispositif d'atténuation acoustique 1 comme un marteau. Pour éliminer tout risque, le dispositif d'atténuation acoustique 1 peut être stocké désassemblé. La durée de vie du dispositif d'atténuation acoustique 1 est ainsi augmentée.

De manière avantageuse, l'organe de connexion 2 peut être utilisé pour connecter d'autres organes fonctionnels indépendants à une tête d'accouplement 9 d'un système de freinage pneumatique (conduite générale, conduite principale, ...), par exemple, un manomètre, des postes d'essai de frein, une alimentation pneumatique formée de la conduite principale, etc. L'organe de connexion 2 forme avantageusement un adaptateur universel qui permet de connecter une pluralité d'organes fonctionnels de natures et de fonctions différentes.

## Revendications

1. Ensemble d'une tête d'accouplement (9) d'une sortie d'air sous pression (CG, CP) d'un véhicule ferroviaire et d'un dispositif d'atténuation acoustique (1), ensemble **caractérisé par le fait que** le dispositif d'atténuation acoustique (1) comprend un organe de connexion (2), monté dans ladite tête d'accouplement (9), et un organe d'atténuation acoustique (3), lesdits organes (2, 3) étant indépendants et assemblés de manière amovible.

2. Ensemble selon la revendication 1, dans lequel l'organe de connexion (2) comporte un corps principal (20) comprenant un orifice traversant (21) s'étendant selon un axe (X).

3. Ensemble selon la revendication 2, dans lequel l'organe de connexion (2) comprend des moyens de centrage configurés pour aligner l'axe (X) de l'orifice traversant (21) avec une sortie d'air sous pression (CG, CP) d'un véhicule ferroviaire.

4. Ensemble selon la revendication 3, dans lequel les moyens de centrage se présentent sous la forme d'une portée (5) au moins partiellement conique ou sphérique.

5. Ensemble selon l'une des revendications 1 à 4, dans lequel l'organe de connexion (2) comprend des moyens de serrage configurés pour serrer l'organe de connexion (2) avec la sortie d'air sous pression (CG, CP) du véhicule ferroviaire.

6. Ensemble selon la revendication 5, dans lequel les moyens de serrage comportent au moins deux éléments de serrage latéraux.

7. Ensemble selon la revendication 5, dans lequel les moyens de serrage comportent un unique élément de serrage central.

8. Ensemble selon l'une des revendications 5 à 7, dans lequel, lorsque l'organe de connexion (2) comporte un corps principal (20) comprenant un orifice traversant (21) s'étendant selon un axe (X), les moyens de serrage sont configurés pour exercer un serrage axial selon ledit axe (X).

9. Ensemble selon l'une des revendications 1 à 8, dans lequel l'organe d'atténuation (3) est assemblé à l'organe de connexion (2) par vissage.

## Patentansprüche

1. Einheit aus einem Kupplungskopf (9) eines Druckluftauslasses (CG, CP) eines Schienenfahrzeugs und einer Schalldämpfungsvorrichtung (1), wobei die Einheit **dadurch gekennzeichnet ist, dass** die Schalldämpfungsvorrichtung (1) ein in dem Kupplungskopf (9) angebrachtes Verbindungsorgan (2) und ein Schalldämpfungsorgan (3) umfasst, wobei die Organe (2, 3) unabhängig und lösbar montiert sind.

2. Einheit nach Anspruch 1, wobei das Verbindungsorgan (2) einen Hauptkörper (20) aufweist, der eine Durchgangsöffnung (21) umfasst, die sich gemäß einer Achse (X) erstreckt.

3. Einheit nach Anspruch 2, wobei das Verbindungsorgan (2) Zentriermittel umfasst, die konfiguriert sind, um die Achse (X) der Durchgangsöffnung (21) mit einem Druckluftauslass (CG, CP) eines Schienenfahrzeugs auszurichten.

4. Einheit nach Anspruch 3, wobei die Zentriermittel die Form eines mindestens teilweise konischen oder kugeligen Sitzes (5) haben.

5. Einheit nach einem der Ansprüche 1 bis 4, wobei das Verbindungsorgan (2) Spannmittel umfasst, die konfiguriert sind, um das Verbindungsorgan (2) mit dem Druckluftauslass (CG, CP) des Schienenfahrzeugs zu spannen.

6. Einheit nach Anspruch 5, wobei die Spannmittel mindestens zwei seitliche Spannelemente aufweisen.

7. Einheit nach Anspruch 5, wobei die Spannmittel ein einziges zentrales Spannelement aufweisen.

8. Einheit nach einem der Ansprüche 5 bis 7, wobei, wenn das Verbindungsorgan (2) einen Hauptkörper (20) aufweist, der eine Durchgangsöffnung (21) umfasst, die sich gemäß einer Achse (X) erstreckt, die Spannmittel konfiguriert sind, um ein gemäß der Achse (X) axiales Spannen durchzuführen.

9. Einheit nach einem der Ansprüche 1 bis 8, wobei das Dämpfungsorgan (3) mit dem Verbindungsorgan (2) durch Schrauben verbunden ist.

## Claims

1. Assembly for a coupling head (9) for a pressurised air outlet (CG, CP) of a railway vehicle and an acoustic muffler device (1), assembly **characterised in that** the acoustic muffler device (1) comprises a connecting member (2), assembled in said coupling head (9), and an acoustic muffler member (3), said members (2, 3) being independent and assembled so that they can be removed.

2. Assembly according to claim 1, wherein the connecting member (2) comprises a main body (20) comprising a through bore (21) extending along an axis (X).

3. Assembly according to claim 2, wherein the connecting member (2) comprises centring means configured to align the axis (X) of the through bore (21) with a pressurised air outlet (CG, CP) of a railway vehicle.

4. Assembly according to claim 3, wherein the centring means are presented in the form of a seat (5) at least partially conical or spherical.

5. Assembly according to one of claims 1 to 4, wherein the connecting member (2) comprises tightening means configured to tighten the connecting member (2) with the pressurised air outlet (CG, CP) of the railway vehicle.

6. Assembly according to claim 5, wherein the tightening means comprise at least two side tightening elements.

7. Assembly according to claim 5, wherein the tightening means comprise one single, central tightening element.

8. Assembly according to one of claims 5 to 7, wherein, when the connecting member (2) comprises a main body (20) comprising a through bore (21) extending along an axis (X), the tightening means are configured to exert an axial tightening along said axis (X).

9. Assembly according to one of claims 1 to 8, wherein the muffler member (3) is assembled to the connecting member (2) by screwing.
